(19) 

Europäisches
Patentamt
European
Patent Office
Office européen
des brevets

(11) **EP 4 220 086 A1**

(12) **EUROPEAN PATENT APPLICATION**
published in accordance with Art. 153(4) EPC

(43) Date of publication:
 **02.08.2023 Bulletin 2023/31**

(21) Application number: **21871490.5**

(22) Date of filing: **22.09.2021**

(51) International Patent Classification (IPC):
 **G01C 21/16** (2006.01)

(86) International application number:
 **PCT/CN2021/119596**

(87) International publication number:
 **WO 2022/063120 (31.03.2022 Gazette 2022/13)**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(30) Priority: **22.09.2020 CN 202011003250**

(71) Applicant: **Autoflight (Kunshan) Co., Ltd.
 Kunshan, Jiangsu 215345 (CN)**

(72) Inventor: **QIAN, Shaochen
 Shenzhen, Guangdong 518000 (CN)**

(74) Representative: **MERH-IP Matias Erny Reichl
 Hoffmann
 Patentanwälte PartG mbB
 Paul-Heyse-Strasse 29
 80336 München (DE)**

(54) **COMBINED NAVIGATION SYSTEM INITIALIZATION METHOD AND APPARATUS, MEDIUM,
 AND ELECTRONIC DEVICE**

(57)     This application discloses an initialization meth-
od, device, medium and electronic equipment of an inte-
grated navigation system. The method comprises: ac-
quiring the current motion state estimation of the aircraft
and the sensor measurement values; acquiring the mo-
tion state estimation values by filtering according to the
current motion state estimation and the attributes of the
sensor measurement values, and obtaining the motion
state estimation prediction results by performing the prediction based on the motion state estimation values; inputting the motion state estimation values into Kalman
linear filter to initialize the Kalman linear filter if the motion
state estimation prediction results converge; and correct-
ing the integrated navigation system according to the in-
itialized Kalman linear filter.

Fig. 1

**EP 4 220 086 A1**

**Description**

PRIORITY CLAIM

This application is a national stage application claiming priority to PCT/CN2021/119596, filed on September 22, 2021, which claims priority to Chinese patent application number 202011003250.2 filed on September 22, 2020, both of which are hereby incorporated by reference in their entireties.

FIELD OF THE DISCLOSURE

Embodiments of the present application relate to the field of information control technology, in particular to an initialization method, device, medium and electronic equipment of an integrated navigation system.

BACKGROUND OF THE INVENTION

Integrated navigation system is a navigation system that combines two or more types of navigation equipment on aircrafts, ships, and other carriers. Each single navigation system has its own unique performance and limitations. By combining several different single systems, we can make use of multiple information sources to complement each other and form a multi-functional system with higher navigation accuracy. How to complete navigation initialization on a platform with limited computing resources has become a thorny problem in the art.

In the related art, the integrated navigation system is initialized based on the assumption that the platform where the aircraft is located is stationary, and the information provided by various sensors is passed through the filter to obtain the optimal estimation values.

However, when the integrated navigation system is initialized, the stability of the information estimation values cannot be guaranteed, and the integrated navigation system may not converge in case of high speed and attitude errors.

SUMMARY OF THE INVENTION

The embodiments of the present application provide an initialization method, device, medium and electronic equipment of integrated navigation system, which can reduce the error of motion state estimation, obtain more accurate motion state estimation values, and facilitate the aircraft to complete the initialization of the integrated navigation system on a high-speed sloshing platform.

Firstly, the embodiments of the present application provide an initialization method of an integrated navigation system, comprising:

Acquiring current motion state estimation of the aircraft and sensor measurement value;
Obtaining motion state estimation values by filtering according to the current motion state estimation and the attributes of the sensor measurement value, and estimating the prediction result of the motion state by performing the prediction based on the motion state estimation values;
Inputting the motion state estimation values into a Kalman linear filter to initialize the Kalman linear filter if the motion state estimation prediction result converges;
Correcting the navigation system according to the initialized Kalman linear filter.

Alternatively, obtaining the motion state estimation values by filtering according to the current motion state estimation and the attribute of the sensor measurement value, including:

Adopting a nonlinear complementary filter, and adopting a complementary filter according to the current motion state estimation and the frequency attribute of the sensor measurement value;
Obtaining the motion state estimation by fusing the result of complementary filtering.

Alternatively, predicting the motion state estimation values to obtain the prediction result of motion state estimation, including:
Performing a prediction operation on at least one motion state estimation values using a preset prediction formula of a nonlinear complementary filter to obtain a motion state estimation prediction result of at least one motion state estimation.

Alternatively, after the motion state estimation prediction result is obtained by prediction based on the motion state estimation values, the method further comprises:

Calculating a motion state estimation prediction result at the calibration time; and acquiring an actual parameter value of the aircraft in the motion state at the calibration time;

Determining that the motion state estimation prediction result converges if the motion state estimation prediction result at the calibration time and the actual parameter value conform to a preset convergence relationship.

Wherein the motion state estimation comprises at least one of the following parameters: velocity, attitude, acceleration, angular velocity, magnetic force, and air pressure.

Secondly, the embodiments of the present application provide an integrated navigation system initialization device, comprising:

Motion state estimation acquisition module, configured to acquire current motion state estimation of the aircraft and the sensor measurement value;

Motion state estimation prediction result acquisition module, configured to obtain the motion state estimation values by filtering according to the current motion state estimation and the attributes of the sensor measurement value, and obtain the motion state estimation prediction result by performing the prediction based on the motion state estimation values;

Kalman linear filter initialization module, configured to input the motion state estimation values into Kalman linear filter to initialize the Kalman linear filter if the motion state estimation prediction result converges;

Navigation system correction module, configured to correct the navigation system according to the initialized Kalman linear filter.

Thirdly, the embodiments of the present application provide a computer-readable storage medium, on which a computer program is stored, and through which, when the program is executed by a processor, the initialization method of the integrated navigation system as described in the embodiments of the present application is implemented.

Fourthly, the embodiments of the present application provide an electronic device, which comprises memory, processor, and computer program stored on the memory and executable on the processor. When the processor executes the computer program, the initialization method of the integrated navigation system as described in the embodiments of the present application is implemented.

According to the technical scheme provided in the embodiments of the present application, acquire the current motion state estimation of the aircraft and the sensor measurement values; obtain the motion state estimation values by filtering according to the current motion state estimation and the attributes of the sensor measurement values, and obtain the motion state estimation prediction results by performing the prediction based on the motion state estimation values; input the motion state estimation values into a Kalman linear filter to initialize the Kalman linear filter if the motion state estimation prediction results converge; and correct the navigation system according to the initialized Kalman linear filter. The above technical scheme can reduce the error of motion state estimation and obtain more accurate motion state estimation values, so that the integrated navigation system has the capability to complete the initialization of motion state estimation on a motion platform with large attitude and great sloshing.

BRIEF DESCRIPTION OF DRAWINGS

Fig. 1 is a flowchart of an initialization method of an integrated navigation system provided in the embodiments of the present application;

Fig. 2 is a schematic diagram of an initialization process of an integrated navigation system provided in the embodiments of the present application;

Fig. 3 is a schematic structural diagram of an integrated navigation system initialization device provided in the embodiments of the present application;

Fig. 4 is a schematic structural diagram of an electronic device provided in the embodiments of the present application.

DETAILED DESCRIPTION

The present application will be further described in detail in combination with the accompanying figures and embodiments. It can be understood that the preferred embodiments described here are only for explaining the present application, but not limiting the present application. In addition, it should be noted that, for convenience of description, only some structures, rather than all structures, related to the present application are shown in the accompany figures.

Before discussing the exemplary embodiments in more detail, it should be mentioned that some exemplary embodiments are described as processes or methods depicted as flowcharts. Although the flowcharts describe the steps as sequential processing, many of them may be implemented in parallel, concurrently, or simultaneously. In addition, the order of the steps may be rearranged. The processing may be terminated when its operation is completed, but may also have additional steps not included in the accompanying figures. The processing may correspond to a method, a function, a procedure, a subroutine, a subprogram, and the like.

Embodiment 1

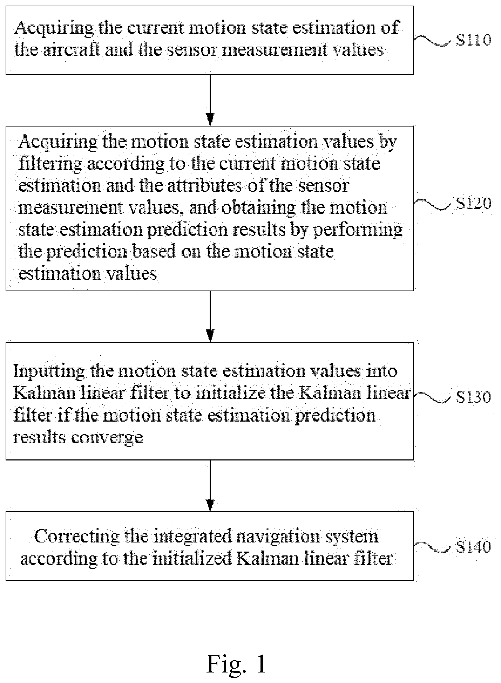

Fig. 1 is a flowchart of an initialization method of an integrated navigation system provided in Embodiment 1 of the present application. This embodiment may be applied to the circumstance under which the platform where the aircraft is located is in a highly maneuverable or bumpy state. The method may be executed by the integrated navigation system initialization device provided in Embodiment 1 of the present application. The device may be implemented by software and/or hardware, and may be integrated into electronic devices such as intelligent terminals for emergency handling.

As shown in Fig. 1, the initialization method of the integrated navigation system comprises: S 110, acquiring the current motion state estimation of the aircraft and the sensor measurement values.

Among them, the current motion state estimation may be the position, velocity magnitude, velocity direction and velocity error of the aircraft by filtering. At the start moment, the motion state estimation is zero. Among them, the aircraft is an aircraft in a moving state, and may be an aircraft in a highly maneuverable or bumpy state, such as an aircraft on a moving ship or a moving vehicle.

The sensor may be altimeter, doppler radar, airspeed indicator, magnetic sensor, radar, or photoelectric imaging systems.

The measured value of the sensor may further include at least one of the following parameters: velocity, attitude, acceleration, angular velocity, magnetic force, and air pressure. Velocity may be measured by the Global Positioning System (GPS) or other positioning components. Attitude and angular velocity are measured by gyroscopes in Inertial Measurement Unit (IMU). Acceleration is measured by the accelerometer in IMU. Magnetic force is measured by a magnetometer. Air pressure is measured by the barometer and used to calculate the altitude of the aircraft. Among them, attitude refers to the state of the three axes of the aircraft in the air relative to a reference line or a reference plane, or a fixed coordinate system. For example, the angular position of the aircraft body axis relative to the ground is usually represented by three angles, such as: pitch angle, which is the angle between the longitudinal axis of the aircraft body and the horizontal plane; yaw angle, which is the included angle between the projection of the longitudinal axis of the aircraft body on the horizontal plane and the parameter line on the plane; and roll angle, which is the angle between the rotation plane of the aircraft itself and the vertical plane passing through the longitudinal axis of the aircraft body.

S120, acquiring the motion state estimation values by filtering according to the current motion state estimation and the attributes of the sensor measurement value, and obtaining the motion state estimation prediction results by performing the prediction based on the motion state estimation values.

Among them, the attribute of the measured value of the sensor refers to the frequency of the sensor measurement value, which may be a low-frequency signal or a high-frequency signal.

Usually, the sensor measurement value also contains information such as noise. According to the frequency of the measured value of the sensor, complementary filtering is used to obtain the motion state estimation values. If the motion state estimation is a high-frequency signal and the noise is a low-frequency signal, the low-frequency noise will be filtered out through a high pass filter to obtain the high-frequency sensor measurement value; if the motion state estimation is a low-frequency signal and the noise is a high-frequency signal, the high-frequency signal will be filtered out through a low-pass filter to obtain a low-frequency sensor measurement value. The high-frequency sensor measurement value and the low-frequency sensor measurement value are weighted and averaged to obtain the motion state estimation values in combination with the current motion state, and then obtain the motion state estimation prediction result based on the motion state estimation values by using the preset prediction formula.

In this embodiment, alternatively, a nonlinear complementary filter is used, and complementary filtering is used according to the frequency attribute of the sensor measurement value; the motion state estimation is obtained by fusing the result of complementary filtering. We perform a prediction operation on at least one motion state estimation values using the preset prediction formula of a nonlinear complementary filter to obtain the motion state estimation prediction result of at least one motion state estimation.

The nonlinear complementary filter is a filter that, after inputting the multi-parameter data, performs split filtering according to the frequency distribution of the parameters, and then splices them to obtain the multi-parameter data with noise removed.

It can be understood that the nonlinear complementary filter has global asymptotic stability and exponential convergence. The prediction of the motion state estimation by the nonlinear complementary filter result in more accurate and effective prediction result.

Calculating the motion state estimation prediction result at a calibration time after the motion state estimation prediction result is obtained through prediction based on the motion state estimation values; and acquiring an actual parameter value of the aircraft in the motion state at the calibration time; determining that the motion state estimation prediction result converges if the motion state estimation prediction result at the calibration time and the actual parameter value conform to a preset convergence relationship. Wherein, the preset convergence relationship is determined by those skilled in the art according to needs or empirical values.

It can be understood that by determining the convergence of the prediction result, it is possible to guarantee the result of the subsequent Kalman linear filter to be more accurate and effective.

Exemplarily, after the velocity parameter prediction result is obtained through prediction based on the velocity parameter value, the velocity parameter prediction result at the calibration time is obtained through calculation; and an actual speed parameter value is obtained through GPS measurement at a calibration time of the aircraft in a moving state; if the velocity parameter prediction result at the calibration time is equal to the actual velocity parameter value measured by GPS, the velocity parameter prediction result is determined to converge. Among them, the velocity parameter prediction is related to acceleration and attitude.

S130, inputting the motion state estimation values into Kalman linear filter to initialize the Kalman linear filter if the motion state estimation prediction results converge.

Among them, Kalman linear filter is a recursive filter used in time-varying linear systems, which makes the optimal prediction of the current motion state estimation based on the data at the previous moment and the data measured at the current moment.

If the prediction result of the motion state estimation converges, the integrated navigation system of the aircraft will input the motion state estimation values into the Kalman linear filter to initialize the Kalman linear filter. Specifically, the Kalman filter predicts the motion state estimation obtained by the measurement unit in the current aircraft based on the motion state estimation values obtained by the previous filtering, and uses the measurement value of external sensors such as GPS, magnetometer, and barometer for correction as the correction amount to obtain the latest estimated prediction of the current motion state estimation.

S140, correcting the navigation system according to the initialized Kalman linear filter.

The initialized Kalman filter estimates and predicts the prediction result of the converged motion state estimation again to obtain more accurate motion state estimation values. The integrated navigation system of the aircraft initializes the integrated navigation system according to the motion state estimation values estimated by the Kalman filter, and then corrects the navigation system to implement the initialization of the integrated navigation system.

According to the technical scheme provided in the embodiments of the present application, obtain the current motion state estimation of the aircraft and the sensor measurement values; acquire the motion state estimation values by filtering according to the current motion state estimation and the attributes of the sensor measurement values, and obtain the motion state estimation prediction results by performing the prediction based on the motion state estimation values; input the motion state estimation values into Kalman linear filter to initialize the Kalman linear filter if the motion state estimation prediction results converge; and correct the navigation system according to the initialized Kalman linear filter. The above technical scheme may reduce the error of motion state estimation and obtain more accurate motion state estimation values, so that the integrated navigation system has the capability to complete the initialization of motion state estimation on a motion platform with great attitude and large sloshing.

Embodiment 2

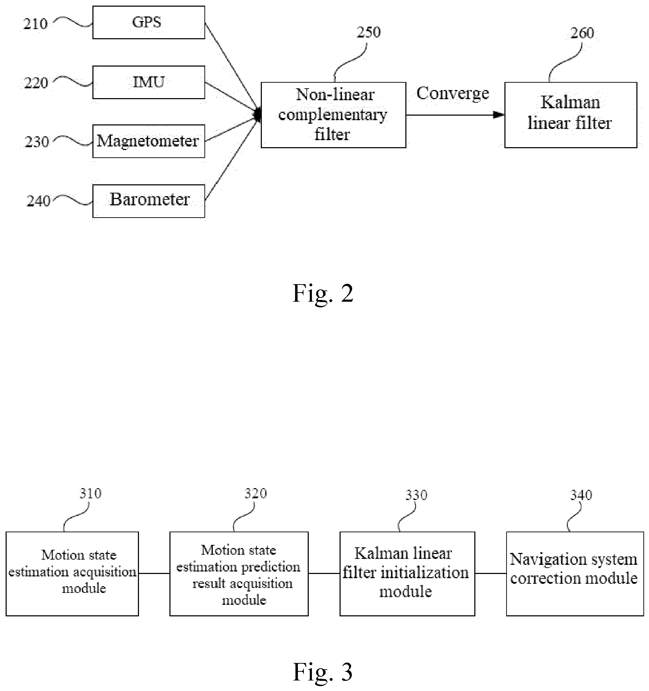

Fig. 2 is a schematic diagram of the initialization process of the integrated navigation system provided in Embodiment 2 of the present application. An alternative method is provided based on the above embodiment.

The schematic diagram of the integrated navigation system initialization process as shown in Fig. 2 comprises GPS 210, IMU 220, magnetometer 230, barometer 240, nonlinear complementary filter 250, and Kalman linear filter 260. Among them, GPS 210 is used to measure the velocity parameter of the aircraft; IMU 220 is used to measure the acceleration parameter and angular velocity parameter of the aircraft; magnetometer 230 is used to measure magnetic force parameter, which may be the earth's magnetic field vector at the geographical location; barometer 240 is used to measure the air pressure parameter, from which the altitude of the aircraft can be calculated; nonlinear complementary filter 250 is used to predict the motion state of the aircraft in motion state according to the motion state estimation values measured by GPS 210, IMU 220, magnetometer 230 and barometer 240; Kalman linear filter 260 is used to perform the optimal prediction of the current motion state estimation according to the effective motion state estimation predicted by the nonlinear complementary filter 250 and the actual motion state estimation measured by GPS 210, IMU 220, magnetometer 230, and barometer 240, so as to implement the initialization of the integrated navigation system. Among them, IMU 220 comprises accelerometer and gyroscope.

Exemplarily, GPS 210, IMU 220, magnetometer 230, and barometer 240 in the aircraft measure the motion state estimation values of the aircraft in a real-time manner, such as velocity, acceleration, angular velocity, earth magnetic field vector, and air pressure, and input these motion state estimation values into the nonlinear complementary filter 250. The nonlinear complementary filter 250 then performs prediction operation according to these real-time motion state estimation values. When the predicted velocity value is equal to the velocity value measured by GPS 210, the integrated navigation system will converge to obtain effective motion state estimation prediction values; it will input the effective motion state estimation prediction values into Kalman filter 260 to initialize Kalman filter 260, which then uses the effective motion state estimation values predicted by the nonlinear complementary filter 250 and the actual motion state estimation values measured by GPS 210, IMU 220, magnetometer 230, and barometer 240 to perform the optimal prediction of the current motion state estimation, so as to implement the correction of the navigation system and complete the initialization of the integrated navigation system.

Specifically, the nonlinear complementary filter 250 can predict the velocity of the aircraft based on the following formula:

$$\dot{\hat{v}} = k_1(v_{GPS} - \hat{v}) + g + \hat{R}a;$$

$$v_{k+1} = v_k + dt\dot{\hat{v}};$$

Where, $\hat{v}$ is the flight platform velocity estimated by the filter, $v_{GPS}$ is the velocity measured by GPS, k1 is the compensation coefficient, g is the gravitational acceleration, and $\hat{R}$ is the rotation matrix projected from the aircraft system to the navigation coordinate system estimated and predicted by the complementary filter, and a is the acceleration of the flight platform measured by the accelerometer.

The nonlinear complementary filter 250 can predict the attitude of the aircraft based on the following formula:

$$\sigma = k_3\hat{R}^T(\widehat{mag} \times mag) + k_4a \times \hat{R}^T(v_{GPS} - \hat{v});$$

The update formula of attitude loop rotation matrix:

$$\dot{\hat{R}} = \hat{R}(\omega + \sigma - \hat{b})_\times; \quad R_{k+1} = R_k + dt\dot{\hat{R}};$$

Where, k3 and k4 are compensation coefficients, $\widehat{mag}$ is the earth magnetic field vector calculated by the complementary filter, $mag$ is the local earth magnetic field vector; $\dot{\hat{R}} = \hat{R}(\omega + \sigma - \hat{b})_\times$ is the update formula of the attitude loop rotation matrix, $R_{k+1} = R_k + dt\dot{\hat{R}}$ is the update formula of the attitude loop, and quaternion can also be used to update the update formula of the attitude loop, which is consistent with the effect of updating the rotation matrix.

The angular velocity zero offset update can be based on the following formula:

$$\dot{\hat{b}} = -k_2\sigma; \quad b_{k+1} = b_k + dt\dot{\hat{b}};$$

For the update of the position loop, the simplest high-low-pass complementary filtering method is adopted, the calculated position information is taken as the high pass component, and the information obtained by GPS 210 and barometer 240 is taken as the low-frequency component. Based on this, filtering is carried out to update the position loop so as to obtain the position parameters of the aircraft.

Embodiment 3

Fig. 3 is a structural diagram of the integrated navigation system initialization device provided in Embodiment 3 of the present application. This embodiment may be applied to the circumstance under which the platform where the aircraft is located is in a highly maneuver or bumpy state. The device may be implemented by software and/or hardware, and can be integrated into electronic devices such as intelligent terminals used for emergency handling.

As shown in Fig. 3, the integrated navigation system initialization device comprises motion state estimation acquisition module 310, motion state estimation prediction result acquisition module 320, Kalman linear filter initialization module 330, and navigation system correction module 340. Among them, the motion state estimation acquisition module 310 is configured to acquire the current motion state estimation of the aircraft and sensor measurement values; the motion state estimation prediction result acquisition module 320 is configured to obtain the motion state estimation value by filtering according to the attribute of the motion state estimation and the sensor measurement value, and predict the motion state estimation prediction result based on the motion state estimation value; Kalman linear filter initialization module 330 is configured to input the motion state estimation values into Kalman linear filter to initialize the Kalman linear filter if the prediction results of the motion state estimation converge; the navigation system correction module 340 is configured to initialize the integrated navigation system according to the initialized Kalman linear filter.

According to the technical scheme provided in the embodiment of the present application, acquire the current motion state estimation of the aircraft and the sensor measurement values through the motion state estimation acquisition module; obtain the motion state estimation value by filtering through the motion state estimation prediction result acquisition module according to the attributes of the motion state estimation and the sensor measurement values, and perform the prediction based on the motion state estimation values to obtain the motion state estimation prediction results; input the motion state estimation values into the Kalman linear filter through the Kalman linear filter initialization module to initialize the Kalman linear filter if the motion state estimation prediction results converge; and correct the navigation system through the navigation system correction module according to the initialized Kalman linear filter. The above technical scheme can reduce the error of motion state estimation and obtain more accurate motion state estimation values, so that the integrated navigation system has the capability to complete the initialization of motion state estimation on a motion platform with great attitude and large sloshing.

Further, the motion state estimation prediction result obtaining module is specifically configured to:
Adopt a nonlinear complementary filter, and adopt complementary filtering according to the frequency attribute of the motion state estimation; obtain the motion state estimation by fusing the results of complementary filtering.

Further, the motion state estimation prediction result acquisition module is specifically configured to:
Perform prediction operation on at least one motion state estimation value by using a preset prediction formula of a nonlinear complementary filter to obtain the motion state estimation prediction result of at least one motion state estimation.

Further, the device further comprises convergence judgment module, which is configured to:
Calculate the motion state estimation prediction result at the calibration time; and acquire the actual parameter value of the aircraft in the motion state at the calibration time; determine that the motion state estimation prediction result converges if the motion state estimation prediction result at the calibration time and the actual parameter value conform to a preset convergence relationship.

Wherein the sensor measurement values include at least one of the following parameters: velocity, attitude, acceleration, angular velocity, magnetic force, and air pressure.

The above integrated navigation system initialization device can execute the initialization method of the integrated navigation system provided in any embodiment of the present application, and has corresponding functional modules and beneficial effects for executing the initialization method of the integrated navigation system.

Embodiment 4

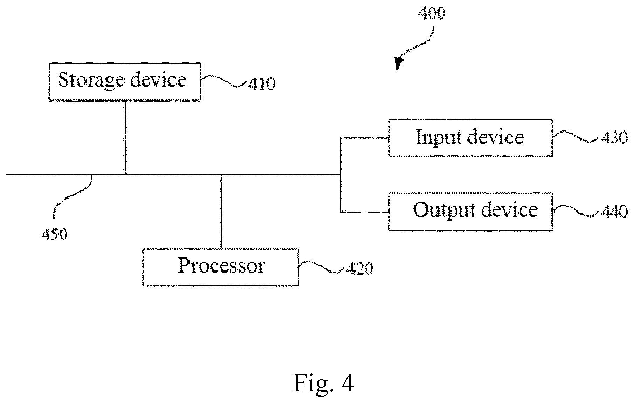

This embodiment of the present application provides an electronic device which can integrate the integrated navigation system initialization device provided in the embodiment of the present application. Fig. 4 is a schematic structural diagram of an electronic device provided in Embodiment 4 of the present application. As shown in Fig. 4, this embodiment provides an electronic device 400, which comprises one or more processors 420; and storage device 410, which is configured to store one or more programs. When one or more programs are executed by one or more processors 420, one or more processors 420 will implement the initialization method of the integrated navigation system provided in the embodiments of the present application. The method comprises:
Acquiring the current motion state estimation of the aircraft and the sensor measurement values; obtaining the motion state estimation values by filtering according to the attributes of the motion state estimation and the sensor measurement values, and obtaining the motion state estimation prediction result by performing the prediction based on the motion state estimation values; inputting the motion state estimation values into Kalman linear filter to initialize the Kalman linear filter if the motion state estimation prediction results converge; correcting the navigation system according to the initialized Kalman linear filter.

Of course, those skilled in the art can understand that the processor 420 also implements the technical scheme of the initialization method of the integrated navigation system provided in any embodiment of the present application.

The electronic device 400 shown in Fig. 4 is only an example, and should not impose any restrictions on the functions and scope of use of the embodiments of the present application.

As shown in Fig. 4, the electronic device 400 comprises processor 420, storage device 410, input device 430, and output device 440; one or more processors 420 may be provided in the electronic device. In Fig. 4, one processor 420 is taken as an example; the processor 420, the storage device 410, the input device 430, and the output device 440 in the electronic device may be connected through a bus or other means. In Fig. 4, the connection is exemplified by the bus 450.

As a computer-readable storage medium, the storage device 410 can be configured to store software programs, computer executable programs and module units, such as program instructions corresponding to the initialization method of the integrated navigation system in the embodiment of the present application.

The storage device 410 may mainly comprise storage program area and storage data area, wherein the storage program area may store the operating system and application programs required for at least one function; the storage data area may store data and the like created according to the use of the terminal. In addition, the storage device 410 may comprise high-speed random access memory, and may also comprise nonvolatile memory, such as at least one disk storage device, flash memory device, or other nonvolatile solid-state storage devices. In some examples, the storage device 410 may further comprise memory remotely arranged relative to the processor 420, which may be connected through a network. Examples of the above networks include but are not limited to the Internet, intranet, local area network (LAN), mobile communication network, and combinations thereof.

The input device 430 may be configured to receive input numbers, character information or voice information, and generate key signal inputs related to user settings and function control of the electronic device. The output device 440 may comprise electronic devices such as display screen and speaker.

The electronic device provided in the embodiment of the present application can achieve the purpose of improving the initialization speed and processing effect of the integrated navigation system.

The integrated navigation system initialization device, medium and electronic equipment provided in the above embodiments can execute the initialization method of the integrated navigation system provided in any embodiment of the present application, and have the corresponding functional modules and beneficial effects of such method. For technical details not described in detail in the above embodiments, please refer to the initialization method of the integrated navigation system provided in any embodiment of the present application.

Embodiment 5

The embodiment of the present application also provides a storage medium containing computer executable instructions, and the such computer executable instructions may be used to execute an initialization method of an integrated navigation system, comprising:

Acquiring the current motion state estimation of the aircraft and the sensor measurement values; obtaining the motion state estimation values by filtering according to the attributes of the motion state estimation and the sensor measurement values, and obtaining the motion state estimation prediction result by performing the prediction based on the motion state estimation values; inputting the motion state estimation value into Kalman linear filter to initialize the Kalman linear filter if the motion state estimation prediction results converge; and correcting the navigation system according to the initialized Kalman linear filter.

Storage medium -- any of various types of memory electronic devices or electronic storage devices. The term "storage medium" is intended to comprise: installation medium, such as CD-ROM, floppy disk or tape device; computer system memory or random access memory, such as DRAM, DDR RAM, SRAM, EDO RAM, Rambus RAM, etc; non-volatile memory, such as flash memory, magnetic media (such as hard disk or optical storage); registers or other similar types of memory elements, etc. The storage medium may also include other types of memory or combinations thereof. In addition, the storage medium may be located in a computer system in which the program is executed, or may be located in a different second computer system, which is connected to the computer system through a network such as the Internet. The second computer system may provide program instructions to the computer for execution. The term "storage medium" may include two or more storage media that may reside in different locations (e.g., in different computer systems connected through a network). The storage medium may store program instructions executed by one or more processors(for example, specifically implemented as computer programs).

Of course, for the storage medium containing computer executable instructions provide in the embodiments of the present application, the computer executable instructions are not limited to the initialization operation of the integrated navigation system as described above, but may also perform relevant operations in the initialization method of the integrated navigation system provided in any embodiment of the present application.

**Claims**

**1.** An initialization method of an integrated navigation system comprises:

acquiring a current motion state estimation of an aircraft and a sensor measurement value;
obtaining a motion state estimation value by filtering according to the current motion state estimation and an attributes of the sensor measurement value, and obtaining a motion state estimation prediction result by performing a prediction based on the motion state estimation value;
inputting the motion state estimation value into a Kalman linear filter to initialize the Kalman linear filter if the motion state estimation prediction results converge;
correcting the navigation system according to the initialized Kalman linear filter.

2. The method according to Claim 1, wherein obtaining the motion state estimation value by filtering according to the current motion state estimation and the attributes of the sensor measurement value, comprises:

adopting a nonlinear complementary filter, and adopting a complementary filter according to a frequency attribute of the current motion state estimation and the sensor measurement value;
obtaining the motion state estimation value by fusing a results of complementary filtering.

3. The method according to Claim 1, wherein performing the prediction based on the motion state estimation value to obtain the motion state estimation prediction result, comprises:
performing a prediction operation on at least one motion state estimation value using a preset prediction formula of a nonlinear complementary filter to obtain the motion state estimation prediction result of at least one motion state estimation.

4. The method according to Claim 1, after obtaining the motion state estimation prediction results by prediction based on the motion state estimation values, the method further comprises:

calculating the motion state estimation prediction results at a calibration time; and acquiring an actual parameter values of the aircraft in a motion state at the calibration time;
determining that the motion state estimation prediction result converge if the motion state estimation prediction results at the calibration time and the actual parameter values conform to a preset convergence relationship.

5. The method according to Claim 1, wherein the motion state estimation comprises at least one of the following parameters: velocity, attitude, acceleration, angular velocity, magnetic force, and air pressure.

6. An initialization device of the integrated navigation system comprises:

motion state estimation acquisition module, configured to acquire a current motion state estimation of an aircraft and a plurality of sensor measurement values;
motion state estimation prediction result acquisition module, configured to obtain a plurality of motion state estimation values by filtering according to the current motion state estimation and a pluralities of attributes of the plurality of sensor measurement values, and predicting a motion state estimation prediction results based on the plurality of motion state estimation values;
Kalman linear filter initialization module, configured to input the plurality of motion state estimation values into a Kalman linear filter to initialize the Kalman linear filter if the prediction results of the motion state estimation converge;
navigation system correction module, configured to correct the navigation system according to the initialized Kalman linear filter.

7. The device according to Claim 6, wherein the motion state estimation prediction result acquisition module is specifically configured to:
adopting a nonlinear complementary filter, and adopting a complementary filter according to a plurality of frequency attributes of the current motion state estimation and the plurality of sensor measurement values; and obtaining the motion state estimation by fusing the results of complementary filtering.

8. The device according to Claim 6, wherein the motion state estimation prediction result acquisition module is specifically configured to:
performing a prediction operation on at least one motion state estimation value using a preset prediction formula of a nonlinear complementary filter to obtain the motion state estimation prediction results of at least one motion state estimation.

9. A computer-readable storage medium storing computer programs, wherein when the programs are executed by a processor using the initialization method of the integrated navigation system according to Claim 1.

10. An electronic device, comprising a memory, a processor, and a plurality of computer programs stored on the memory and executable on the processor, wherein when the processor executes the computer programs, the initialization method of the integrated navigation system according to Claim 1 is implemented.

Acquiring the current motion state estimation of the aircraft and the sensor measurement values — S110

Acquiring the motion state estimation values by filtering according to the current motion state estimation and the attributes of the sensor measurement values, and obtaining the motion state estimation prediction results by performing the prediction based on the motion state estimation values — S120

Inputting the motion state estimation values into Kalman linear filter to initialize the Kalman linear filter if the motion state estimation prediction results converge — S130

Correcting the integrated navigation system according to the initialized Kalman linear filter — S140

Fig. 1

Fig. 2

Fig. 3

400

Storage device ⌐410

Input device ⌐430

Output device ⌐440

450

Processor ⌐420

Fig. 4

## INTERNATIONAL SEARCH REPORT

| International application No. |
| --- |
| **PCT/CN2021/119596** |

**A.   CLASSIFICATION OF SUBJECT MATTER**

G01C 21/16(2006.01)i

According to International Patent Classification (IPC) or to both national classification and IPC

**B.   FIELDS SEARCHED**

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

CNPAT, CNKI, WPI, EPODOC: 领峰电动, 钱劭晨, 组合导航, 融合, GPS, INS, 卡尔曼滤波, 互补滤波, 频率, 频域, 预测, 收敛, 初始化, 校正, 修正, integrated 2w navigation, fusion, Kalman, KF, complementary filter+, CF, frequency, estimat+, converg +, initializ+, correct+, adjust+

**C.   DOCUMENTS CONSIDERED TO BE RELEVANT**

| Category* | Citation of document, with indication, where appropriate, of the relevant passages | Relevant to claim No. |
| --- | --- | --- |
| PX | CN 112066985 A (SHENZHEN LINGFENG ELECTRIC INTELLIGENT TECHNOLOGY CO., LTD.) 11 December 2020 (2020-12-11) claims 1-10, description paragraphs [0001]-[0110], figures 1-4 | 1-10 |
| X | CN 105865453 A (NANJING UNIVERSITY OF AERONAUTICS AND ASTRONAUTICS) 17 August 2016 (2016-08-17) description, paragraphs [0003], [0037]-[0093], figures 1-3 | 1-10 |
| A | CN 103414451 A (BEIJING INSTITUTE OF TECHNOLOGY) 27 November 2013 (2013-11-27) entire document | 1-10 |
| A | CN 106403940 A (YANG, Baichuan) 15 February 2017 (2017-02-15) entire document | 1-10 |
| A | CN 108398128 A (PEKING UNIVERSITY SHENZHEN GRADUATE SCHOOL) 14 August 2018 (2018-08-14) entire document | 1-10 |

☑ Further documents are listed in the continuation of Box C.          ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 December 2021** | **22 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/119596**

### C.    DOCUMENTS CONSIDERED TO BE RELEVANT

| Category* | Citation of document, with indication, where appropriate, of the relevant passages | Relevant to claim No. |
|---|---|---|
| A | CN 110377056 A (SHENZHEN AUTEL INTELLIGENT AVIATION TECHNOLOGY CO., LTD.) 25 October 2019 (2019-10-25)<br>    entire document | 1-10 |
| A | WO 2020040331 A1 (HANSEO UNIVERSITY ACADEMIC COOPERATION FOUNDATION) 27 February 2020 (2020-02-27)<br>    entire document | 1-10 |

Form PCT/ISA/210 (second sheet) (January 2015)

## INTERNATIONAL SEARCH REPORT
### Information on patent family members

International application No.

**PCT/CN2021/119596**

| Patent document cited in search report | | | Publication date (day/month/year) | Patent family member(s) | | | Publication date (day/month/year) |
|---|---|---|---|---|---|---|---|
| CN | 112066985 | A | 11 December 2020 | None | | | |
| CN | 105865453 | A | 17 August 2016 | CN | 105865453 | B | 14 September 2018 |
| CN | 103414451 | A | 27 November 2013 | CN | 103414451 | B | 25 November 2015 |
| CN | 106403940 | A | 15 February 2017 | CN | 106403940 | B | 19 October 2018 |
| CN | 108398128 | A | 14 August 2018 | CN | 108398128 | B | 24 August 2021 |
| CN | 110377056 | A | 25 October 2019 | WO | 2021031974 | A1 | 25 February 2021 |
| WO | 2020040331 | A1 | 27 February 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021119596 W
- CN 202011003250